# EUROPEAN PATENT SPECIFICATION

(11) **EP 3 056 784 B1**
(45) Date of publication and mention of the grant of the patent: **04.04.2018**
(21) Application number: 16155361.5
(22) Date of filing: 11.02.2016
(51) Int. Cl.: F16L 37/088, F16L 37/44

(54) **QUICK COUPLING DEVICE FOR A PRESSURIZED-FLUID CIRCUIT**
SCHNELLKUPPLUNGSVORRICHTUNG FÜR EINEN KREISLAUF MIT UNTER DRUCK STEHENDEM FLUID
DISPOSITIF DE RACCORD RAPIDE POUR CIRCUIT DE FLUIDE SOUS PRESSION

(30) Priority: 11.02.2015 IT BO20150055
(43) Date of publication of application: 17.08.2016
(73) Proprietor: Sistem Pneumatica S.r.l., 40132 Bologna (IT)
(72) Inventor: GAMBERINI, Giovanni, 40132 BOLOGNA (IT); ANEDDA, Massimiliano, 40132 BOLOGNA (IT); GAMBERINI, Lorenzo, 40132 BOLOGNA (IT); GAMBERINI, Federico, 40132 BOLOGNA (IT)
(74) Representative: Bergadano, Mirko

(56) References cited:
- DE-A1-102006 002 565
- JP-A- H08 219 352
- US-A- 3 151 891
- US-B1- 6 802 491

## Description

The present invention relates to a quick coupling device for a pressurized-fluid circuit.

In particular, the present invention is advantageously, but not exclusively, intended for use in compressed air circuits, to which the following description specifically refers but without any loss of generality.

As is known, the quick coupling device in question allows the quick connection of a hose to a tool (for example, a compressed air gun), or the coupling of a first hose to a second pipe.

The hose usually has a male element with a first lathe-turned end, available on the market with different external shapes, and a second threaded end.

The quick coupling device generally consists in a sleeve with a female inlet suitable to house said shaped male element, and allows the male profile to be locked in position by means of an internal system.

At the other end of the quick coupling device there is a threading for the connection thereof to the line.

Thus, the pressurized fluid, for example compressed air, can pass through the quick coupling device and the male profile giving continuity to the line.

The locking of the male profile is generally implemented through the use of spheres, which, by moving radially, prevent the male element from sliding inside the hole of the coupling device.

Unlocking can be performed by axially sliding an external ring, in most cases, or by pressing a button in other less frequent cases.

However, the existing solutions in the field of pressurized-fluid circuits have the following drawbacks, due mainly to the use of spheres that move radially as a locking element:
- the insertion of sets of 4 or 6 radial spheres makes assembly very complicated, especially when done automatically, requiring the use of rather complex ad *hoc* systems;
- each sphere presses on the male in a very small precise area, causing significant local stresses which can easily affect the locking surface and undermine operation in the long term; in order to attempt to solve this problem, the male elements must therefore be made of a hard and expensive metal, usually steel;
- the use of a ring nut for unlocking the system is particularly troublesome, especially when using only one hand; and
- the systems currently used cannot avoid the expulsion of the male element under pressure in that they do not envisage the systematic use of vents for the compressed fluid between the coupling device and the delivery device; in addition, each quick coupling device is designed to house only one type of male profile.

DE-A1-10 2006 002565 illustrates the preamble portion of claim 1.

Therefore, the main aim of the present invention is to provide a quick coupling device for a pressurized-fluid circuit which overcomes the drawbacks described above and is, at the same time, easy and inexpensive to produce.

Therefore, according to the present invention there is provided a quick coupling device for a pressurized-fluid circuit as claimed in Claim 1, or in any one of the claims depending directly or indirectly on Claim 1.

In order to better understand the present invention, a non-limiting preferred embodiment thereof will now be described by way of example with reference to the accompanying drawings, in which:

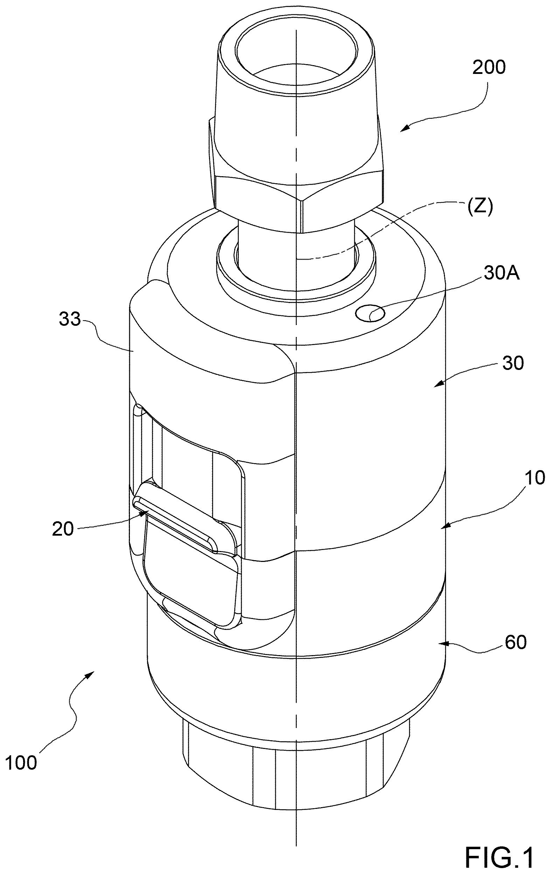

- Figure 1 illustrates a three-dimensional view of a quick coupling device according to the present invention, coupled to a respective male element;
- Figure 2 shows the quick coupling device of Figure 1 from which a portion of an element has been removed for the sake of clarity;
- Figure 3 illustrates the quick coupling device of Figure 2 from which a further element has been removed, in order to increase the readability of the drawing;
- Figure 4 shows an exploded view of the quick coupling device of Figure 1; note, incidentally, that in Figure 4, for the sake of clarity, the same single sliding button is shown from different points of observation;
- Figure 5 illustrates an enlarged view of a detail of the quick coupling device shown in the previous Figures 1, 2, 3, 4;
- Figure 6 shows a three-dimensional longitudinal section of the quick coupling device and of the male element associated therewith;
- Figure 7 illustrates an enlarged scale view of a longitudinal section of a first configuration of the quick coupling device according to the invention;
- Figure 8 shows an enlarged scale view of a longitudinal section of a second configuration of the quick coupling device according to the invention;
- Figure 9 illustrates a three-dimensional view of an element of the quick coupling device according to the present invention; and
- Figure 10 shows a longitudinal section of the element of Figure 9.

In the accompanying Figures, reference number 100 denotes as a whole a quick coupling device reversibly coupled to a male element 200 on a user device (not illustrated in its entirety).

Incidentally, note that neither the male element 200, nor the related user device are part of the present invention, and, therefore, any reference to such elements will be made in relation to the functional characteristics of the quick coupling device 100, which is the only object of the present invention.

It is well known that the quick coupling device 100 is, in turn, connected (by means of systems that are known and not described herein) to a distribution line (not illustrated) of a pressurized fluid, for example compressed air.

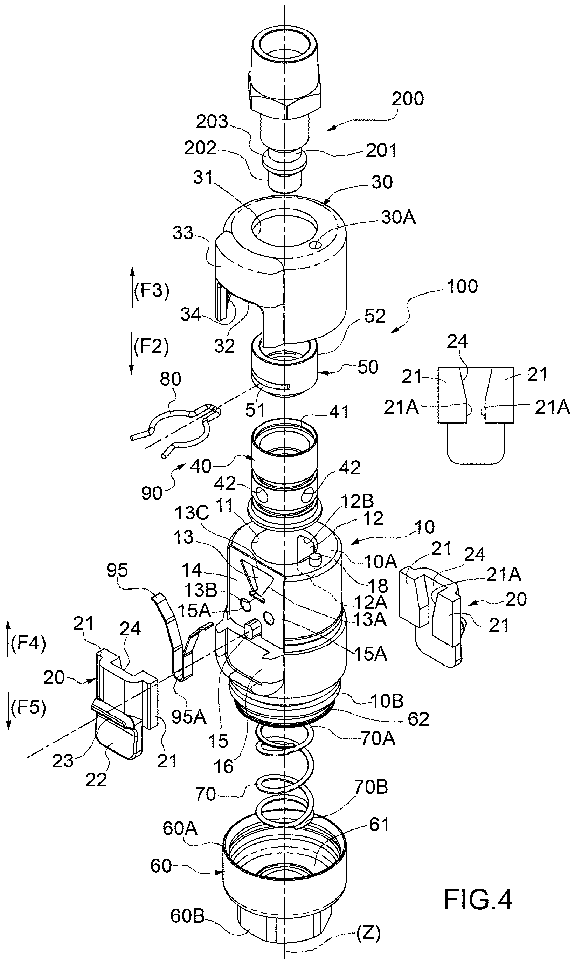

As shown in greater detail in the exploded view in Figure 4 the quick coupling device 100 comprises a hollow main body 10 having a through hole 11 aligned along a vertical axis (Z) of substantial longitudinal symmetry.

The hollow main body 10 also comprises an upper front face 10A and a lower end 10B.

The hollow main body 10 further comprises a through rear window 12 of a substantially rectangular shape with the two longest sides parallel to the vertical axis (Z), and a shaped front through window 13 obtained in a flattened part 14 of the cylindrical external surface of said hollow main body 10. The rear through window 12 diametrically faces the shaped front through window 13.

In particular, the shaped front window 13 comprises a first upper portion 13A, substantially trapezoidal in shape, which ends with a second lower slot shaped portion 13B which is at the smaller side of the trapezium.

The rear through window 12 has the same overall height (height measured along the axis (Z)) as the shaped front through window 13, and the second lower slot shaped portion 13B is at the same height as the lower edge 12A of the rear through window 12; whereas, the upper edge 13C of the first upper portion 13A is at the same height as the upper edge 12B of the rear through window 12 (Figure 4).

As also shown in Figure 4 the flattened area 14 is further provided with a pin 15, which projects radially from the hollow main body 10, and a prismatic seat 16, which, in use, partially houses a sliding button 20 (see below).

On the flattened area 14 there are also two protruding elements 15A, which are arranged on opposite sides with respect to the pin 15 for purposes that will be made clear later on.

Take note also that the upper front face 10A of the main body 10 is provided with a centring pin 18, which, in use, is coupled with a corresponding seat 30A obtained in a cover 30 (Figure 4).

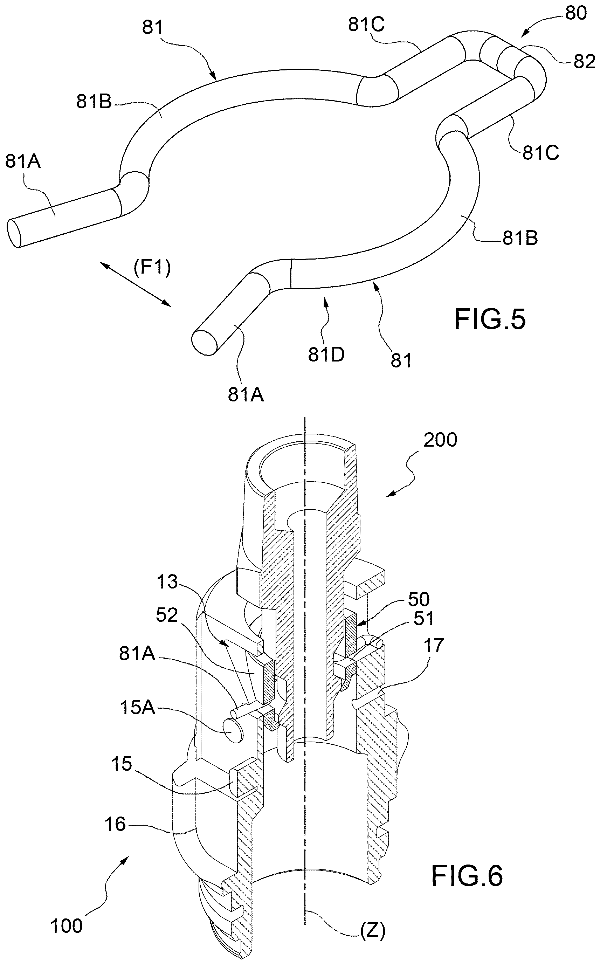

As illustrated in Figures 6, 7, 8, the hollow main body 10 is further provided with a vent hole 17, the use of which will be described in detail when discussing the operation of the quick coupling device 100.

The cover 30, in turn, has a central through hole 31 (in use aligned along the axis (Z) with said through hole 11 in the main body 10), and a front window 32 having a bulging frame 33 that determines an undercut 34 suitable to slidingly receive two side wings 21 of said sliding button 20.

More specifically, it can be said that the sliding button 20, in addition to said guiding side wings 21, comprises a central body 22 with a protrusion 23 (Figure 4) advantageously knurled to facilitate the use by an operator of the sliding button 20.

The internal face of the sliding button 20 is provided with a trapezoidal shaped recess 24 defined by two internal surfaces 21A of the two side wings 21.

The operation of the recess 24 will be described later on.

As also illustrated in Figure 4, the quick coupling device 100 is further provided with a sleeve 40 and a bushing 50, which, in use, possibly rests on an abutment 41 obtained on the inside of said sleeve 40.

Thus, in actual use, the bushing 50 is superimposed over the sleeve 40 (see below).

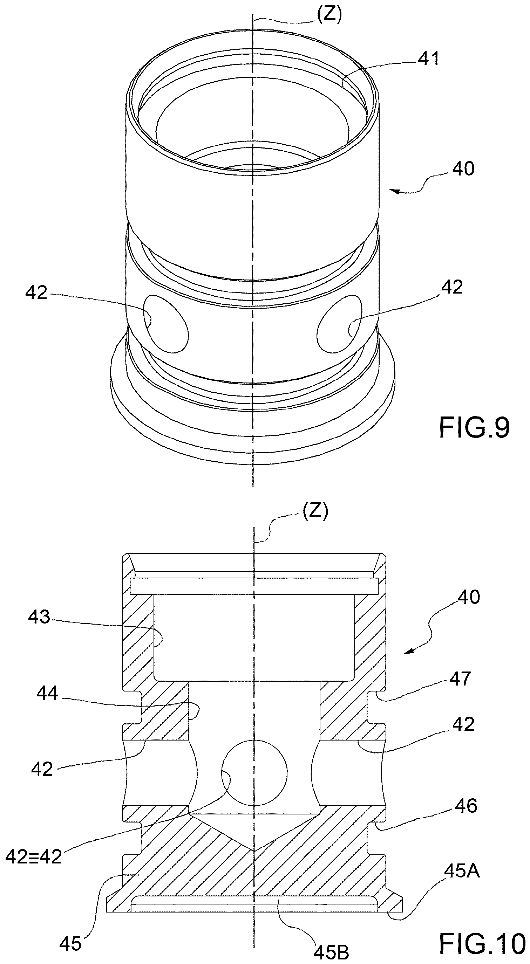

As shown in greater detail in Figures 9 and 10, the sleeve 40 is provided with four side through holes 42 arranged radially (spaced at 90° from one another), which permit the passage of the pressurized fluid in both the inlet and the outlet directions towards/from the inside of said sleeve 40.

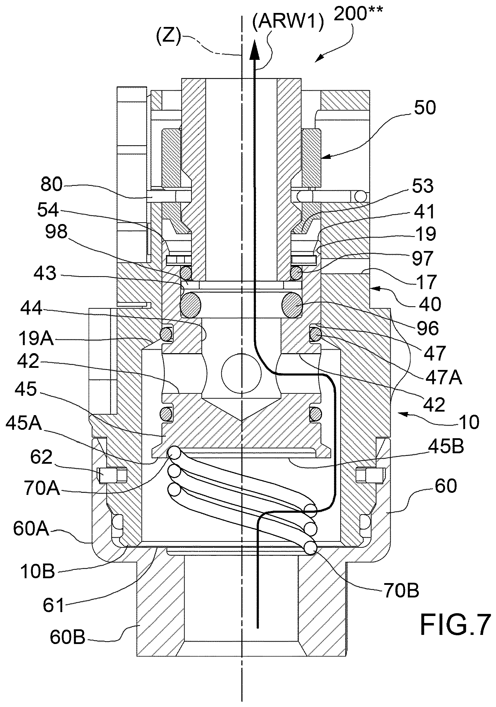

As shown in greater detail in Figures 7, 8, 9, 10, the sleeve 40 is further provided with a recess 43 from which a blind hole 44 leads downwards.

Said four side through holes 42 arranged radially start from the external surface of the sleeve 40 and end precisely in the blind hole 44.

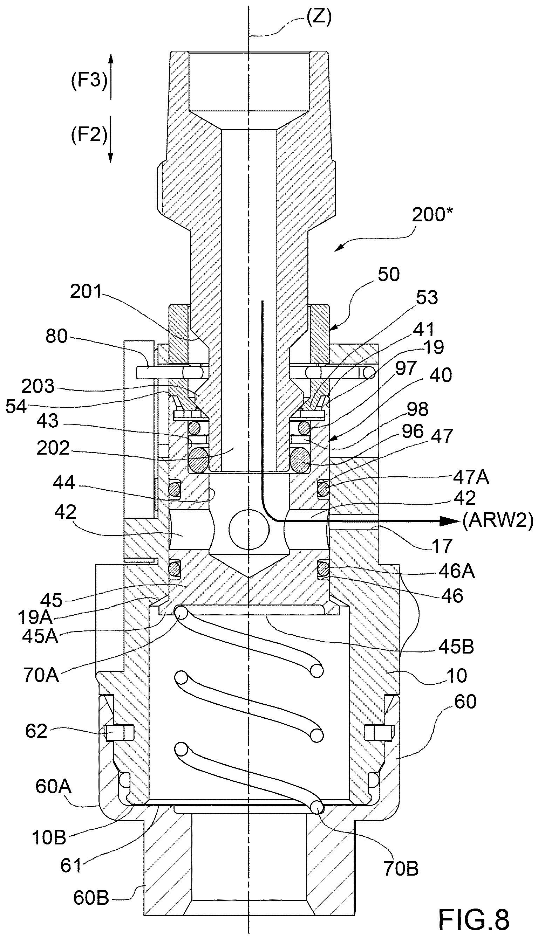

In particular, Figure 10, shows that the sleeve 40 is closed at the lower end by a bottom 45 (having a protruding edge 45A), and that the external surface thereof is provided with two ring shaped seats 46, 47, each of which is suitable to house a respective O-ring 46A, and 47A (Figures 7, 8).

The O-rings 46A, 47A ensure sealing, with respect to the pressurized fluid, during the vertical sliding of the sleeve 40 in a jacket 19 of the hollow main body 10; said jacket 19 being provided with a related shoulder 19A on which the protruding edge 45A of the bottom 45 comes to rest at the end of the upward movement.

The two O-rings 46A, 47A are located on opposite sides with respect to the four side through holes 42 through which the pressurized fluid flows out or in.

Also with reference to Figures 7, 8, in the recess 43 (obtained in the sleeve 40) there are housed two O-rings 96, 97 having the same outside diameters, but different cross sections. In particular, the O-ring 97 (upper) has a smaller cross section than the O-ring 96 (lower); due to the difference in the cross sections and for reasons that will be better clarified later on in this document, inside the O-ring 97 (upper) there is a larger free area than inside the O-ring 96 (lower) (see below).

Interposed between the two O-rings 96, 97 there is a ring shaped spacer 98 which, as will become clearer later on, also acts as a centring element for the head of the male element which is thus prevented from moving radially and undermining the seal of the quick coupling device 100.

Furthermore, on the lower end 10B of the hollow main body 10 there is mounted a threaded base 60 to which a feeding pipe of the pressurized fluid (for example, compressed air) (not illustrated) is connected, in a known manner that is not illustrated (Figure 4).

The threaded base 60 (Figures 4, 7, 8) comprises, in turn, an internally shaped first upper portion 60A above a second internally threaded portion 60B, the diameter of which is smaller than that of said first portion 60A. Between the two portions 60A, 60B there is thus defined a supporting surface 61, on which the lower end 10B of the hollow main body 10 rests.

Also note that the coupling between the lower end 10B and said first upper portion 60A is achieved, in a known manner, by means of an O-Ring 62 as shown in Figures 4, 7, 8.

The sleeve 40, the bushing 50 and the threaded base 60 are always coaxial to the axis (Z).

Inside the hollow main body 10 and the threaded base 60 there is a coil spring 70, which, as will be explained later on, serves for the elastic recovery of the sleeve 40 and the bushing 50. In use, a first upper end 70A of the coil spring 70 rests on the lower surface 45B (Figures 4, 7, 8) of the bottom 45 of the sleeve 40; while a second lower end 70B is supported by the supporting surface 61.

Going back now to the bushing 50, note that it has two transversal circumferential through notches 51, 52, facing one another. The circumferential through notch 51 is larger than the circumferential through notch 52.

The bushing 50 is connected to a shaped locking/unlocking profile 80 shown in greater detail in the enlarged view in Figure 5.

In the particular embodiment of the shaped locking/unlocking profile 80 illustrated in Figure 5, this element comprises two elastic prongs 81 joined together by means of a transverse connecting element 82.

Each elastic prong 81 comprises, in turn, a first rectilinear portion 81A, a second curvilinear portion 81B, and a third rectilinear portion 81C integral with said transverse connecting element 82.

The two second curvilinear portions 81B define a central portion 81D of the shaped locking/unlocking profile 80. Advantageously, said central portion 81D has a substantially circular shape open in two opposite points, respectively, at the two first rectilinear portions 81A, and at the two third rectilinear portions 81C and the transverse connecting element 82.

The shaped locking/unlocking profile 80 is nothing more than an elastic element that can be elastically deformed in one of the two directions identified by a double pointed arrow (F1) (Figure 5).

Said shaped locking/unlocking profile 80 can be made of a single material or of different materials assembled together to obtain the same result.

Furthermore, the shaped profile may have other shapes different from those illustrated which are compatible with its functions.

As we shall see, in use the shaped locking/unlocking profile 80 engages/disengages with/from a groove 201 obtained for that purpose in the male element 200 (Figure 4) .

Again with reference to Figure 4, it is clear that the lower end portion of the male element 200 further comprises a fitting 202 separated from said groove 201 by a collar 203.

In particular, the shaped portion of the locking/unlocking profile 80 which actually engages/disengages with/from the groove 201 is said central portion 81D.

In the present invention, the shaped locking/unlocking profile 80 actually replaces the traditional locking spheres arranged circumferentially with respect to the male element when the latter is inserted in the main body of the quick coupling device.

In use, the two third portions 81C and the transverse connecting element 82 are inserted in the circumferential through notch 52, while the two first portions 81A pass through the circumferential through notch 51.

Moreover, in use the two third portions and the transverse connecting element 82 pass through said rear through window 12, while the two first portions 82A are inserted in the shaped front through window 13.

The sleeve 40, the bushing 50 and the shaped locking/unlocking profile 80 constitute a mobile unit 90 that is inserted inside the hollow main body 10 and subject to the elastic forces exerted by said coil spring 70.

In Figure 7 other interesting details of the bushing 50 are illustrated.

On the bottom of the bushing 50 there is an edge 53 bent inwards (in the direction of the axis (Z)), on which, in use, the lower surface of the collar 203 of the male element 200 rests.

Immediately before the edge 53 there is a shoulder 54 (Figures 7, 8).

Also note that the lower limit of the movement of the mobile unit 90 is given by the second slot shaped portion 13B of the shaped front through window 13, and the lower edge 12A of the rear through window 12 as a whole, while the upper limit of the travel of the mobile unit 90 is provided by the upper edge 13C of the shaped front window 13, and the upper edge of the window 12B of the rear through window 12.

In other words, the downward (in the direction indicated by an arrow (F2) (Figure 4) and upward movements (in the direction indicated by an arrow (F3)) are limited by the respective translation movements of the shaped locking/unlocking profile 80 that translates by moving in the rear through window 12 (the two third portions 81C and the transverse connecting element 82) and in the shaped front window 13 (the two first portions 81A).

It is also worth noting that, in use, the two first portions 81A protrude from the flattened area 14 towards an unlocking spring (also for returning the sliding button 20) 95, advantageously made of spring steel and having a substantially **V** shape.

The sideways movements of the unlocking spring 95 are limited by two protruding elements 15A that jut out from the flattened area 14.

In use, the unlocking spring 95 (Figure 4) is coupled to the pin 15 at its vertex 95A.

Furthermore, as will be explained more clearly later on, in use, the unlocking spring 95 is slidingly coupled in a reversible manner to the trapezoidal shaped recess 24 in the sliding button 20.

Ultimately, in its upward movement (arrow (F4)), and downward movement (arrow (F5)) (Figure 4), the sliding button 20 is guided by the seat 16 and by the undercut 34 obtained in the cover 30, which, in use, as previously described, is coupled to the main body 10 also using the coupling between the centring pin 18 and the seat 30A.

The operation of the quick coupling device 100 when coupled to the male element 200 will now be described.

When the user inserts the male element 200 in the coupling 100 the mobile unit 90 is pushed down (arrow (F2)).

The downward movement of the unit 90 occurs by overcoming the resistance opposed by the coil spring 70, which is compressed.

Also due to the movement of the mobile unit 90 in the direction of the arrow (F2), the shaped locking/unlocking profile 80 is also pushed in the same direction and as it moves is deformed (in one of the directions identified by the arrow (F1), (Figure 5) by the sliding of its two first rectilinear portions 81A in the first portion 13A of the shaped front through window 13.

At the same time, the two third rectilinear portions 81C and the transverse connecting element 82 translate along the rear through window 12 in a direction parallel to the axis (Z).

Meanwhile, the central portion 81D closes around the groove 201 in the male element 200 to achieve the desired coupling between said male element 200 and the quick coupling device 100.

Actually, as shown in Figures 7 and 8, the mobile unit 90 is pushed down (arrow (F2)) by the thrust of the shoulder 54 of the bushing 50 on the abutment 41 of the sleeve 40 and thus on the entire mobile unit 90.

The thrust stops when the two first rectilinear portions 81A of the prongs 81 reach the second slot shaped portion 13D, where these two first rectilinear portions 81A open in a direction given by the arrow (F1) owing to the fact that the slot has an elongated shape. Note that the central portion 81D always remains engaged with the groove 201 and that the male element 200 therefore always remains locked inside the quick coupling device 100.

Actually, the shaped locking/unlocking profile 80 behaves exactly like a reversible locking elastic element of the male element 200 in the quick coupling device 100.

Meanwhile, the sliding button 20 has remained in its "lower dead point" in the prismatic seat 16.

In other words, in this first step the loading of the mechanism and the reversible locking of the male element 200 in the quick coupling device 100 are achieved as illustrated in Figure 7.

At this point, as shown in Figure 7, the pressurized fluid can flow, in the direction of an arrow (ARW1), from the supply line (connected to the second lower portion 60B of the threaded base 60) to a user device (not illustrated) connected to the male element 200.

It is also worth noting that in the case illustrated in Figure 8, when using, for example, a male element 200* of the ISO 6150B type, the lower edge of the perforated fitting 202 is entirely surrounded by the O-ring 96 which acts as a seal.

If, instead, the user wishes to switch to a German type 200** male element, for example, the seal is achieved by the O-ring 97, as illustrated in Figure 7.

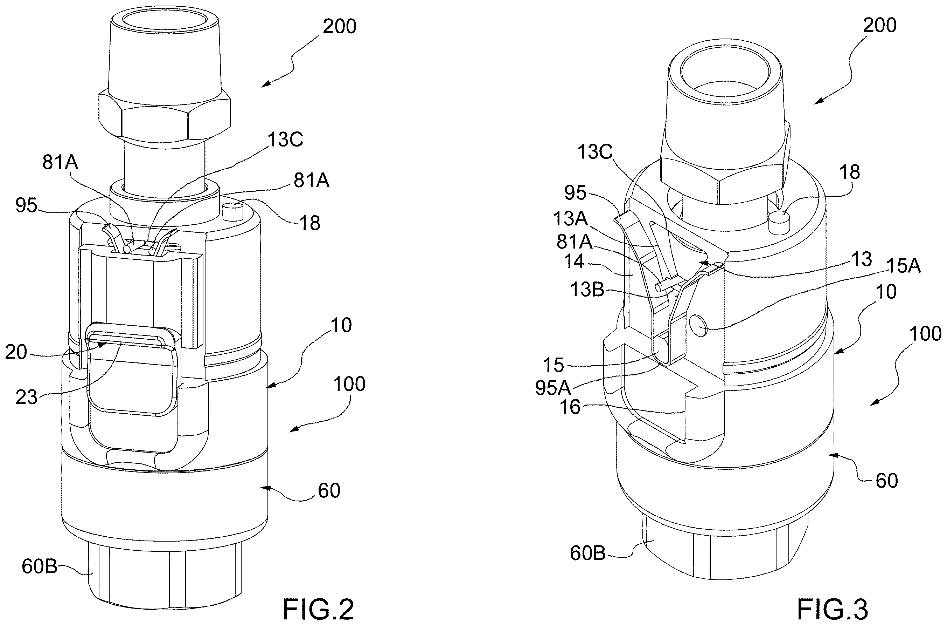

Furthermore, as shown in Figure 2, at the start of the loading step the two first rectilinear portions 81A are inside the unlocking spring 95 and on the upper edge 13C.

When the mobile unit 90 is pushed down (arrow (F2)), the two first rectilinear portions 81A slide inside the first portion of the shaped front through window 13A bringing the two ends closer together (arrow F1) until reaching the position of the second slot shaped portion of the front shaped through window 13B, locking in this position and at the same time locking the male element 200 to the quick coupling device 100.

Now, in order to unhook the male element 200 from the quick coupling device 100, the procedure is as follows:
(a) the operator moves the sliding button 20 upwards (arrow (F4); Figure 4);
(b) the deformation of the unlocking spring 95 by the walls of the recess 24 in the sliding button 20 causes the first rectilinear portions 81A to come closer (in one of the directions of the arrow (F1)) and the disengagement of said first rectilinear portions 81A from the second slot shaped portion 13B (lower travel limit);
(c) due to the elastic thrust exerted by the coil spring 70 and the pressure of the fluid, the entire mobile unit 90 moves upwards (arrow (F3), (Figure 4), so that a side through hole 42 faces the vent hole 17 (Figure 8);
(d) therefore, the pressurized fluid, that was trapped between the user tool (not illustrated) and the quick coupling device 100, is discharged into the external environment in the direction of an arrow (ARW2) (Figure 8); also note that in this step the protruding edge 45A of the bottom 45 rests on the shoulder 19A obtained in the jacket 19 and the O-ring 47A prevents the fluid coming from the compressor from flowing out; this significantly increases safety upon unhooking by preventing the troublesome and hazardous ejection of the user tool under pressure as soon as it is detached; also note that during venting the male element 200 is still locked by the quick coupling device 100, and the shaped locking/unlocking profile 80 is still engaged with the groove 201 in said male element 200 (Figure 8); and
(e) at this point, the button 20 can be released and, due to the effect of the elastic recovery of the unlocking spring 95, it moves downwards (arrow F5) and in this way allows the opening of the unlocking spring 95, the removal of the first rectilinear portions 81A and the release of the male element 200.

It is also interesting to note that in changing from a male element 200* of the ISO 6150B type (Figure 8), to a male element 200** of the German type (Figure 7), the fact that the sleeve 40 can be split with respect to the bushing 50 is fundamental.

In other words, the configuration of the mobile unit 90 is automatically adjusted according to the type of male element 200*, 200** to be coupled with said quick coupling device 100.

In the case of the German profile (Figure 7) the lower edge of the perforated fitting 202 actually rests on the spacer 98 to allow the gasket 97 to guarantee the required hydraulic seal.

The main advantages of the quick coupling device according to the present invention are the following:
- the male element is locked by using a shaped elastic profile which opens and closes as it slides vertically in appropriate seats, to lock and/or unlock the coupling device;
- said system is opened by means of a button system with longitudinal sliding, which, above all, also allows unhooking to be performed in safety;
- a universal seal is obtained by dividing the sliding cylinder into two components, so as to always have the best position both for the use of the O-rings and for locking the male element;
- the traditional locking spheres have been replaced with a single elastic shaped element that is extremely simple to assemble and very inexpensive;
- the forces exerted by the shaped element on the male element are distributed on a larger surface than that of the spheres, making it possible to use softer and less expensive materials, such as plastic, for example, to produce the male elements;
- unlocking is achieved by means of a longitudinal translation of the button, which is therefore also very convenient to operate even with one hand; above all, unlocking is performed by holding the quick coupling device in place with one hand and simply "pulling" the button in the opposite direction, that is to say, with the most intuitive movement possible;
- using a very simple system and low-cost components it is possible to implement a universal product (which has so far been tested on four different commercial profiles) and ensure safety upon unhooking.

## Claims

1. Quick coupling device (100) for a pressurized-fluid circuit;
quick coupling device (100) comprising:
- a hollow main body (10); and
- means for reversibly locking (80) a male element (200) within said hollow main body (10);
wherein said reversibly locking means (80) comprise at least a shaped locking/unlocking profile (80);
**wherein** said at least one shaped locking/unlocking profile (80) is mounted on a mobile unit (90) to translate within an axial through hole (19) drilled in a hollow main body (10) of said quick coupling device (100);
**wherein** said hollow main body (10) comprises guiding means (12, 13) for said mobile unit (90);
**wherein** said at least a shaped locking/unlocking profile (80) comprises a central portion (81D) to lock a male element (200) when it is inserted in said quick coupling device (100);
said quick coupling device (100) being **characterized in that** said at least a shaped locking/unlocking profile (80) further comprises at least two end portions (81A, 81C, 82) to engage said guiding means (12, 13) for said mobile unit (90); said
at least a shaped locking/unlocking profile (80) being at least partially housed in at least a circumferential through slot (51, 52) made on said mobile unit (90).

2. Quick coupling device (100), according to Claim 1, **characterized in that** the elastic deformation of said at least two end portions (81A) causes the locking of said male element (200) when it is inserted in said quick coupling device (100).

3. Quick coupling device (100), according to Claim 2, **characterized in that** said at least two end portions (81A) are guided in a portion (13) of said guiding means (12, 13) to carry out the wished elastic deformation of at least a portion of said at least a shaped locking/unlocking profile (80) .

4. Quick coupling device (100), according to anyone of the preceding Claims, **characterized in that** it comprises unlocking means (20, 24, 95) of said at least a shaped locking/unlocking profile (80).

5. Quick coupling device (100), according to Claim 4, **characterized in that** said unlocking means (20, 24, 95) comprise a sliding button (20) provided with a corresponding profile (24), which is coupled to a substantially V-shaped unlocking spring (95); said unlocking spring (95) being able to house said at least two end portions (81A).

6. Quick coupling device (100), according to anyone of the preceding Claims, **characterized in that** said mobile unit (90) comprises a sleeve (40) to rest on a bushing (50); said bushing (50) comprising holding means (96, 97, 98) to house male elements (200; 200*; 200**) having different profiles.

## Patentansprüche

1. Schnellkupplungsvorrichtung (100) für einen Kreislauf mit einem unter Druck stehenden Fluid;
wobei die Schnellkupplungsvorrichtung (100) Folgendes umfasst:
- einen hohlen Hauptkörper (10) und
- Mittel zum reversiblen Verriegeln (80) eines Steckerelements (200) innerhalb des hohlen Hauptkörpers (10);
wobei die reversibel verriegelnden Mittel (80) zumindest ein geformtes Ver-/Entriegelungsprofil (80) umfassen;
wobei das zumindest eine geformte Ver-/Entriegelungsprofil (80) auf einer mobilen Einheit (90) montiert ist, um sich innerhalb eines axialen Durchgangslochs (19), das in einen hohlen Hauptkörper (10) der Schnellkupplungsvorrichtung (100) gebohrt ist, hin- und her zu bewegen;
wobei der hohle Hauptkörper (10) Führungsmittel (12, 13) für die mobile Einheit (90) umfasst; wobei das zumindest eine geformte Ver-/Entriegelungsprofil (80) einen zentralen Abschnitt (81D) zum Verriegeln eines Steckerelements (200), wenn es in die Schnellkupplungsvorrichtung eingesetzt ist, umfasst;
wobei die Schnellkupplungsvorrichtung (100) **dadurch gekennzeichnet ist, dass** das zumindest eine geformte Ver-/Entriegelungsprofil (80) weiterhin zumindest zwei Endabschnitte (81A, 81C, 82) umfasst, um mit den Führungsmitteln (12, 13), für die bewegliche Einheit (90) in Eingriff zu kommen;
wobei das zumindest eine geformte Ver-/Entriegelungsprofil (80) zumindest teilweise in zumindest einer umlaufenden Aussparung (51, 52) untergebracht ist, die in die mobile Einheit (90) eingebracht ist.

2. Schnellkupplungsvorrichtung (100) nach Anspruch 1, **dadurch gekennzeichnet, dass** die elastische Verformung der zumindest zwei Endabschnitte (81A) die Verriegelung des Steckerelements (200) verursacht, wenn es in die Schnellkupplungsvorrichtung eingesetzt ist.

3. Schnellkupplungsvorrichtung (100) nach Anspruch 2, **dadurch gekennzeichnet, dass** die mindestens zwei Endabschnitte (81A) in einem Abschnitt (13) der Führungsmittel (12, 13) geführt sind, um die gewünschte elastische Verformung von zumindest einem Abschnitt des zumindest einen geformten Ver-/Entriegelungsprofils (80) durchzuführen.

4. Schnellkupplungsvorrichtung (100) nach einem der vorhergehenden Ansprüche, **dadurch gekennzeichnet, dass** sie Entriegelungsmittel (20, 24, 95) des zumindest einen geformten Ver-/Entriegelungsprofils (80) umfasst.

5. Schnellkupplungsvorrichtung (100) nach Anspruch 4, **dadurch gekennzeichnet, dass** die Entriegelungsmittel (20, 24, 95) einen Schiebeknopf (20) umfasst, der mit einem entsprechenden Profil (24), das mit einer im wesentlichen V-förmigen Entriegelungsfeder (95) gekoppelt ist, versehen ist;
wobei die Entriegelungsfeder (95) geeignet ist die zumindest zwei Endabschnitte (81A) unterzubringen.

6. Schnellkupplungsvorrichtung (100) nach einem der vorhergehenden Ansprüche, **dadurch gekennzeichnet, dass** die mobile Einheit (90) eine Hülse (40) umfasst, um auf einer Buchse (50) aufzuliegen, wobei die Buchse (50) Haltemittel (96, 97, 98) zur Unterbringung von Steckerelementen (200; 200*; 200**) mit unterschiedlichen Profilen umfasst.

## Revendications

1. Dispositif de raccord rapide (100) pour circuit de fluide sous pression ;
le dispositif de raccord rapide (100) comprenant :
- un corps principal creux (10) ; et
- des moyens pour verrouiller de manière réversible (80) un élément mâle (200) à l'intérieur dudit corps principal creux (10) ;
dans lequel lesdits moyens de verrouillage réversible (80) comprennent au moins un profil de verrouillage/déverrouillage façonné (80) ;
dans lequel ledit au moins un profil de verrouillage/déverrouillage façonné (80) est monté sur une unité mobile (90) pour se déplacer à l'intérieur d'un trou traversant axial (19) percé dans un corps principal creux (10) dudit dispositif de raccord rapide (100) ; dans lequel ledit corps principal creux (10) comprend des moyens de guidage (12, 13) pour ladite unité mobile (90) ; dans lequel ledit au moins un profil de verrouillage/déverrouillage façonné (80) comprend une partie centrale (81D) pour verrouiller un élément mâle (200) lorsqu'il est inséré dans ledit dispositif de raccord rapide (100) ;
ledit dispositif de raccord rapide (100) étant **caractérisé en ce que** ledit au moins un profil de verrouillage/déverrouillage façonné (80) comprend en outre au moins deux parties d'extrémité (81A, 81C, 82) pour mettre en prise lesdits moyens de guidage (12, 13) de ladite unité mobile (90) ; ledit au moins un profil de verrouillage/déverrouillage façonné (80) étant au moins partiellement logé dans au moins une fente traversante circonférentielle (51, 52) pratiquée sur ladite unité mobile (90).

2. Dispositif de raccord rapide (100), selon la revendication 1, **caractérisé en ce que** la déformation élastique desdites au moins deux parties d'extrémité (81A) provoque le verrouillage dudit élément mâle (200) lorsqu'il est inséré dans ledit dispositif de raccord rapide (100).

3. Dispositif de raccord rapide (100), selon la revendication 2, **caractérisé en ce que** lesdites au moins deux parties d'extrémité (81A) sont guidées dans une partie (13) desdits moyens de guidage (12, 13) pour réaliser la déformation élastique souhaitée d'au moins une partie dudit au moins un profil de verrouillage/déverrouillage façonné (80).

4. Dispositif de raccord rapide (100), selon l'une quelconque des revendications précédentes, **caractérisé en ce qu'**il comprend des moyens de déverrouillage (20, 24, 95) dudit au moins un profil de verrouillage/déverrouillage façonné (80).

5. Dispositif de raccord rapide (100), selon la revendication 4, **caractérisé en ce que** lesdits moyens de déverrouillage (20, 24, 95) comprennent un bouton coulissant (20) doté d'un profil correspondant (24), qui est couplé à un ressort de déverrouillage sensiblement en V (95) ; ledit ressort de déverrouillage (95) pouvant loger lesdites au moins deux parties d'extrémité (81A).

6. Dispositif de raccord rapide (100), selon l'une quelconque des revendications précédentes, **caractérisé en ce que** ladite unité mobile (90) comprend un manchon (40) pour reposer sur une douille (50) ; ladite douille (50) comprenant des moyens de maintien (96, 97, 98) pour loger des éléments mâles (200 ; 200* ; 200**) ayant des profils différents.
